## Europäisches Patentamt

## European Patent Office

## Office européen des brevets

(19)

(11) Veröffentlichungsnummer: **0 149 450**
**B1**

(12) **EUROPÄISCHE PATENTSCHRIFT**

(45) Veröffentlichungstag der Patentschrift:
**31.05.89**

(21) Anmeldenummer: **84890256.5**

(22) Anmeldetag: **27.12.84**

(51) Int. Cl.⁴: **B 61 D 27/00**

(54) **Klimaanlage für Eisenbahnfahrzeuge.**

(30) Priorität: **30.12.83 AT 4582/83**

(43) Veröffentlichungstag der Anmeldung:
**24.07.85 Patentblatt 85/30**

(45) Bekanntmachung des Hinweises auf die Patenterteilung:
**31.05.89 Patentblatt 89/22**

(84) Benannte Vertragsstaaten:
**BE DE FR IT**

(56) Entgegenhaltungen:
**AT-B-325 096**
**AT-B-334 417**
**AT-B-340 464**

(73) Patentinhaber: **ALEX. FRIEDMANN KOMMANDITGESELLSCHAFT, Am Tabor 6, A-1200 Wien (AT)**

(72) Erfinder: **Ertl, Herbert, Maxwellgasse 5/80/3, A-1210 Wien (AT)**

(74) Vertreter: **Krause, Walter, Dr. Dipl.- Ing., Postfach 200 Singerstrasse 8, A-1010 Wien (AT)**

LIBER, STOCKHOLM 1989

EP 0 149 450 B1

**Beschreibung**

Die Erfindung bezieht sich auf eine Klimaanlage für Eisenbahnfahrzeuge mit Fahrgastabteilen und einer Luftzuleitung zu den Abteilen, wobei die Temperatur der zugeleiteten Frischluft bei einem bestimmten Besetzungsgrad der Abteile ausreicht, um die Solltemperatur in den Abteilen zu erreichen, und eine durch einen Thermostaten gesteuerte Zusatzheizung in jedem Abteil vorgesehen ist, die bei Verminderung der Besetzung der Abteile gegenüber dem genannten bestimmten Besetzungsgrad die gewünschte Solltemperatur im Abteil aufrecht erhält. Bei herkömmlichen Luftheizungsanlagen mit Ein- oder Zweikanalsystemen (Sihe AT-B-334 417 bzw. AT-B-340 464) wird meist eine von der Besetzung unabhängige Luftmenge in die einzelnen Abteile eingeblasen. Bei fehlender oder nur teilweiser Besetzung der Abteile kommt es zum Einblasen von unnötig hohen Luftmengen in die Abteile, wodurch es zu unnötigen hohen Energieverlusten kommt, da eben eine entsprechend große Luftmenge konditioniert werden muß.

Eine besetzungsabhängige Luftmengeneinbringung bringt einen dem Besetzungsgrad angepaßten Leistungsverbrauch und damit eine Energieeinsparung mit sich. Die bisher bekannten Klimaanlagen der eingangs erwähnten Art haben sich jedoch aufgrund ihres komplizierten Aufbaues nicht durchgesetzt.

Ziel der Erfindung ist es eine Klimaanlage der eingangs erwähnten Art vorzuschlagen, die sich durch einen einfachen Aufbau auszeichnet.

Erfindungsgemäß wird dies dadurch erreicht, daß in der Luftzuleitung jedes Abteiles eine Drosseleinrichtung vorgesehen ist, welche eine stufenlose aber begrenzte Verminderung des Einströmquerschnittes zuläßt und diese Drosseleinrichtung mit der Zusatzheizung in solcher Wirkverbindung steht, daß bei Erhöhung der Zusatzheizung infolge Verminderung der Besetzung im Abteil der Ausströmquerschnitt der Luftzuleitung um ein vorbestimmtes Maß gedrosselt wird. Durch diese Maßnahmen wird erreicht, daß aufgrund der jedem einzelnen Abteil zugeordneten Drosseleinrichtung jedes Abteil mit der jeweils erforderlichen Luftmenge versorgt werden kann.

Nach einem weiteren Merkmal der Erfindung ist vorgesehen, daß die Zusatzheizung durch elektrische Heizkörper gebildet ist und die Drosseleinrichtung durch ein von einem Bimetall gesteuertes, die Luftzuleitung zum Abteil mehr oder weniger freigebendes Drosselorgan gebildet ist. Auf diese Weise ergibt sich ein sehr einfacher Aufbau der Klimaanlage. Dabei ist es besonders vorteilhaft, wenn der elektrische Heizkörper in einem vorzugsweise unter den Sitzflächen geführten, Umluftkanal angeordnet ist, der in einen an die Drosseleinrichtung anschließenden zu Luftauslaßöffnungen im Abteil führenden Kanal mündet, wobei im Mündungsbereich die beiden Kanäle durch ein im Querschnitt L-förmiges Drosselorgan getrennt sind.

In diesem Falle wird der Umluftstrom durch den aus der Luftzuführung in den zu den Luftauslaßöffnungen führenden Kanal einströmenden Luftstrom durch das Ejektorprinzip bewegt.

Ein besonders einfacher mechanischer Aufbau ergibt sich, wenn das Drosselorgan von zwei im Bereich ihrer einen Enden miteinander verbundenen. Bimetallstreifen gehalten ist, von denen einer der aus der Luftzuleitung abströmenden Luft und der andere der Einwirkung der Zusatzheizung ausgesetzt ist. Dadurch ist es auch möglich beim Vorheizbetrieb ein Offenhalten des Ausströmquerschnittes der Luftzuleitung sicherzustellen.

Grundsätzlich ist aber die Ausbildung der Zusatzheizung als elektrischer Heizkörper nicht unbedingt erforderlich. Die Zusatzheizung kann auch durch eine zweite Luftzuführung, die mit höherer Temperatur betrieben wird, gebildet sein. Dabei wird bei zu geringer Temperatur im Abteil die zweite Luftzuführung geöffnet und gleichzeitig die Zufuhr von Luft in das Abteil aus der ersten Luftzuführung gedrosselt.

Um den konstruktiven Aufwand gering zu halten kann vorgesehen sein, daß das das Drosselorgan steuernde Bimetall der Einwirkung des elektrischen Heizkörpers ausgesetzt ist. Eine weitere Möglichkeit der Beeinflussung des über ein Bimetall gesteuerten Drosselorgans besteht auch darin, das Bimetall mit einer eigenen Heizwicklung zu versehen, die gemeinsam mit der Zusatzheizung gesteuert wird.

Eine weitere Ausführungsform der Erfindung zeichnet sich dadurch aus, daß das Drosselorgan durch einen Stellmotor gesteuert ist, der von einem die Signale eines Abteil-Temperaturfühlers und einer Temperaturstelleinrichtung verarbeitenden Regelverstärker gesteuert ist, der gleichzeitig auch die Zusatzheizung steuert. Dadurch wird eine direkte Beeinflussung sowohl der Zusatzheizung als auch der Drosseleinrichtung in Abhängigkeit von der Temperatur im Abteil erreicht. Diese ist aber ein sehr guter Indikator für den Besetzungsgrad das Abteils. So sinkt die Temperatur im Abteil, wenn die Besetzung sinkt.

Bei einer besonders bevorzugten Ausführungsform der Erfindung ist weiters vorgesehen, daß in der Luftzuleitung zu den einzelnen Abteilen ein Druckfühler angeordnet ist, der auf die Regelung der Luftversorgung einwirkt und bei einer Druckerhöhung aufgrund der Drosselung des Abströmens in die Abteile durch die Drosseleinrichtungen den Luftdurchsatz vermindert. Auf diese Weise wird verhindert, daß sich der Zustrom von Luft zu den übrigen Abteilen ändert, wenn in einem oder mehreren Abteilen aufgrund einer geringer werdenden Besetzung die Luftzufuhr in diesem bzw. diesen Abteil(en) verringert wird und es daher zu einem Druckanstieg in der allen Abteilen gemeinsamen Luftzuleitung kommt.

Die Erfindung wird nun anhand der Zeichnung näher erläutert. Dabei zeigen

Figur 1 schematisch eine erste Ausführungsform einer erfindungsgemäßen Klimaanlage,

Figur 2 ein Blockschaltbild der Regeleinrichtung für ein Abteil bei der Klimaanlage nach Fig. 1,

Figur 3 ein weiteres Ausführungsbeispiel einer Regeleinrichtung für ein Abteil,

Figuren 4 und 5 Schnitte gemäß den Linien IV-IV bzw. V - V in Fig. 3.

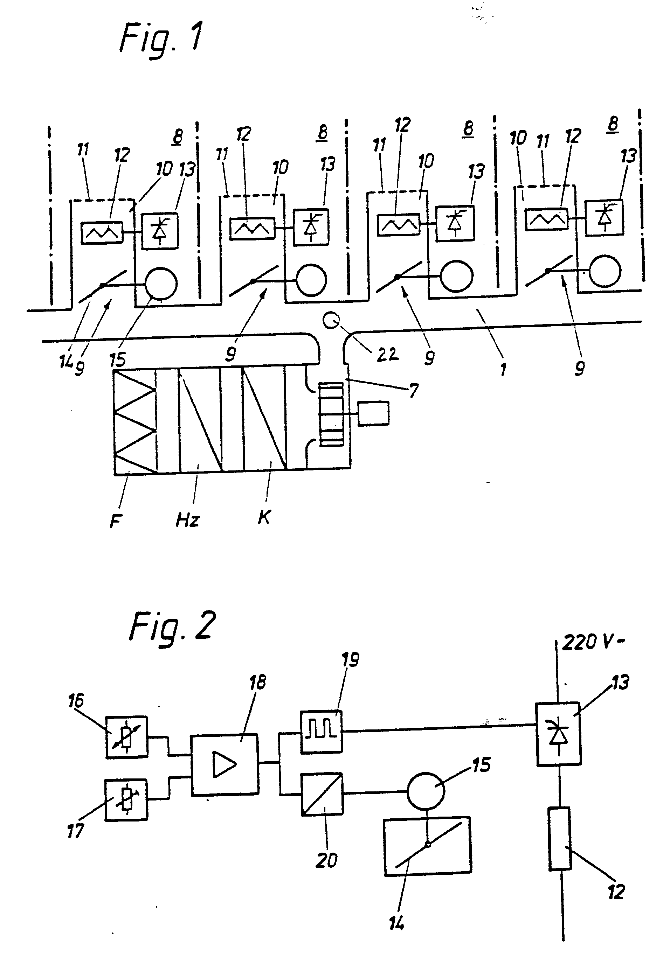

Die Klimaanlage ist bei der Ausführungsform gemäß Fig. 1 als Einkanal-Klimaanlage ausgebildet. Diese weist ein Klimaaggregat 7 auf, das in üblicher Weise einen Filter F, einen Lufterhitzer Hz, einen Luftkühler K und einen Ventilator umfaßt und das in Abhängigkeit von einem nicht dargestellten Außen-Temperaturfühler geregelt ist. Die durch das Klimaaggregat 7 konditionierte Luft strömt über die Luftzuleitung 1, in der sich der Druckfühler 22 befindet, zu den einzelnen Abteilen 8, und von dort über eine Drosseleinrichtung 9 und einen Kanal 10 zu Luftauslaßöffnungen 11.

Bei der Ausführungsform nach Fig. 1 sind in den Kanälen 10 als elektrische Heizkörper 12 ausgebildete Zusatzheizungen angeordnet, die über elektronische Schalter 13 gesteuert sind.

Die Drosseleinrichtungen 9 umfassen im wesentlichen eine Drosselklappe 14, die von einem Stellmotor 15 bewegt wird und zwischen einer voll geöffneten Stellung und einer teilweise geöffneten Drosselstellung verstellbar ist.

Wie aus Fig. 2 ersichtlich, umfaßt die Regeleinrichtung für jedes Abteil 8 einen Abteil-Temperaturfühler 16, zur Erfassung der Temperatur im Abteil, eine Temperatur-Stelleinrichtung 17 zur Vorgabe einer Soll-Temperatur, einen mit diesem eingangsseitig verbundenen Regelverstärker 18 und die an dessen Ausgang angeschlossenen Stellorgane und zwar den Stellmotor 15 und den elektronischen Schalter 13. Dabei sind zwischen dem Ausgang des Regelverstärkers 18 und dem elektronischen Schalter 13 bzw. dem Stellmotor 15 noch ein Impulsgeber 19 bzw. ein Signalumsetzer 20 zwischengeschaltet.

Der durch die Temperatur-Stelleinrichtung vorgegebene Sollwert wird aufgrund der von der Außentemperatur abhängigen Steuerung der Konditionierung der Luft bei einem bestimmten Besetzungsgrad, z. B. bei voller Besetzung bei voll geöffneter Drosseleinrichtung 9 durch die über die Luftzuleitung 1 zugeführte Luft im Abteil innerhalb vorgegebener Toleranzen gehalten. Nimmt nun die Besetzung das Abteils ab, so sinkt nach einiger Zeit die Temperatur im Abteil aufgrund der geringeren Wärmeabstrahlung der verbliebenen Benutzer das Abteils ab. Dies führt zu einem positiven Ausgangssignal des Regelverstärkers 18, wodurch der Impulsgeber 19 der Ausgangsspannung des Regelverstärkers entsprechende Impulsfolgen, z. B. ähnlich einer Phasenanschnittsteuerung an den elektronischen Schalter 13 abgibt und diesen im Rhytmus der einlangenden Impulse zündet und den elektrischen Heizkörper 12 impulsweise z. B. ähnlich einer Phasenanschnittsteuerung mit der Stromquelle verbindet.

Der Impulsgeber 19 gibt jedoch nur dann Impulse ab, wenn die Polarität der Ausgangsspannung des Regelverstärkers einer unter dem Sollwert liegenden Temperatur im Abteil 8 entspricht.

Gleichzeitig gibt auch der Signalumsetzer 20 der Ausgangsspannung des Regelverstärkers 18 und deren Polarität entsprechende Signale, z. B. Impulse entsprechender Polarität und frequenz an den Stellmotor 15, der z. B. als Schrittschaltmotor ausgebildet sein kann ab, sodaß dieser im Falle einer unter der Solltemperatur liegenden Abteil-Temperatur die Drosselklappe 14 in Richtung "Schließen" bewegt und so die Luftzufuhr zum Abteil vermindert, wodurch sich erhebliche Energieeinsparungen ergeben.

Steigt die Temperatur aufgrund der Zusatzheizung wieder auf den Sollwert an, so sinkt die Ausgangsspannung des Regelverstärkers 18 ab und die Zusatzheizung 12 bleibt abgeschaltet und es stellt sich ein neuer Gleichgewichtszustand ein.

Erhöht sich die Besetzung im Abteil wieder, so wird die Temperatur im Abteil aufgrund der vermehrten Wärmeabstrahlung der Insassen des Abteils, über den Sollwert ansteigen. Dadurch liefert der Regelverstärker 18 eine entsprechende Ausgangsspannung mit zum erstbeschriebenen Fall umgekehrter Polarität, sodaß der Impulsgeber 19 keine Impulse abgibt und daher die Zusatzheizung nicht in Betrieb gehen kann, wohl aber der Signalumsetzer 20 Signale mit entsprechender Polarität abgibt und daher der Stellmotor 15 und die Drosselklappe 14 in Richtung zur Offenstellung hin bewegt, wodurch der erhöhte Luftbedarf gedeckt wird.

Für den Vorheizbetrieb kann vorgesehen werden, daß die Ansteuerung des Stellmotors stillgelegt wird, sodaß die Drosselklappe 14 in ihrer voll geöffneten Lage verbleibt, auch wenn die Zusatzheizung in Betrieb ist.

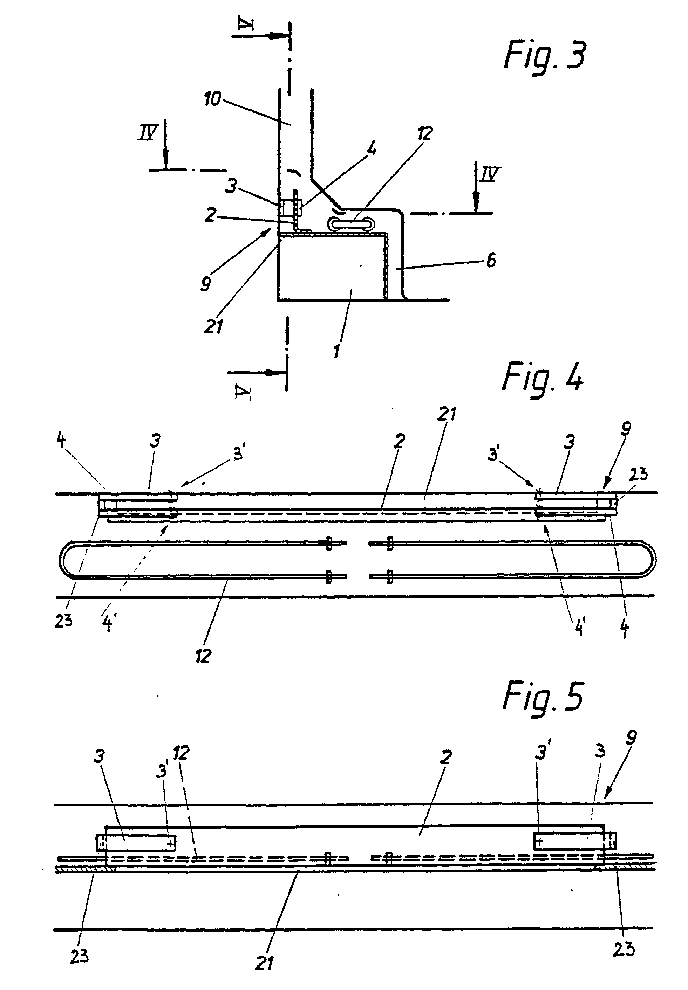

Die Ausführungsform gemäß der Fig. 3 bis 5 unterscheidet sich von der oben beschriebenen nur dadurch, daß die Drosseleinrichtung 9 statt einer Drosselklappe 14 ein balkenförmiges, im Querschnitt L-förmiges Drosselorgan 2 aufweist, zu dessen Antrieb statt eines Stellmotors 15 Bimetallstreifen 3 und 4 vorgesehen sind. Außerdem ist die Zusatzheizung, die in diesem Fall ebenfalls durch elektrische Heizkörper 12 gebildet ist, in einem unter den Fenstern verlaufenden Umluftkanal 6 angeordnet, der in den Kanal 10 mündet, in den die aus der Luftzuführung 1 über die Drosseleinrichtung 9 abströmende Luft einströmt und aufgrund der Ejektorwirkung die Luft aus dem Umluftkanal 6 mitreißt.

Der Heizkörper 12 kann ebenfalls wie bereits anhand der Fig. 2 erläutert, gesteuert sein, nur, daß eben kein Stellmotor an den Regelverstärker angeschlossen ist.

Die Bimetallstreifen 3 sind an ihren einen Enden 3' direkt mit der Wand 9 des Kanals 10 verbunden; die gegenüberliegenden Enden 4' der Bimetallstreifen 4 sind am im Querschnitt L-förmigen Drosselorgan 2 befestigt. Die freien Enden von je zwei Bimetallstreifen 3 und 4 sind über ein Zwischenstück 23 miteinander verbunden, wobei der eine 4 der Einwirkung des Heizkörpers 12 und der andere 3 der aus der Luftzuleitung 1 abströmenden konditionierten Luft ausgesetzt ist. Je nach der Krümmung der Bimetallstreifen wird die Ausströmöffnung 21 der Luftzuführung 1 mehr oder weniger freigegeben.

Sinkt die Abteil-Temperatur zu weit ab, so wird, wie bereits erläutert, der elektrische Heizkörper 12 aktiviert. Dadurch ist der an dem Drosselorgan 2 angreifende Bimetallstreifen 3 der Wärmestrahlung des Heizkörpers 12 ausgesetzt und verbiegt sich in der Weise, daß die Austrittsöffnung 21 mehr überdeckt und der Ausströmquerschnitt vermindert wird.

Grundsätzlich ist es auch möglich, die Bimetallstreifen 3 mit Heizwicklungen zu versehen, die ähnlich dem Stellmotor 15 gemäß Fig. 2 vom Regelverstärker 18 gesteuert werden. Durch Anbringung zweier Heizwicklungen an verschiedenen Stellen der Bimetallstreifen können diese unterschiedlich beeinflußt werden, sodaß eine Steuercharakteristik wie anhand der Fig. 2 beschrieben, erreicht werden kann. Dabei kann für den Vorheizbetrieb ebenfalls der Ausströmquerschnitt der Lufzuleitung 1 in dem voll geöffneten Zustand gehalten werden.

Bei der dargestellten Lösung mit direkt der Einwirkung des Heizkörpers 12 und der aus der Luftzuleitung 1 abströmenden Luft ausgesetzten Bimetallstreifen 4 bzw. 3 ist letzterer hauptsächlich für den Vorheizbetrieb wesentlich, bei dem mit einer weit wärmeren, über die Luftzuleitung eingebrachten Luft gearbeitet wird, als dies im Normalbetrieb auch bei niedrigen Außentemperaturen der Fall ist. Bei diesen hohen Temperaturen der in den Kanal 10 eintretenden Luft biegen sich die Bimetallstreifen 3 in Richtung zur Offenstellung des Drosselorgans 2 hin und verhindern damit eine Verengung des Auslaßquerschnittes der Luftzuleitung 1 auch wenn der Heizkörper 12 eingeschaltet ist. Die Bimetallstreifen 3 und 4 sind dabei so ausgelegt, daß bei den im Normalbetrieb üblichen Temperaturen der Luft in der Luftzuleitung 1 die Bimetallstreifen 3 praktisch unwirksam sind, bei den im Vorheizbetrieb üblichen weit höheren Temperaturen jedoch die Streifen 3 die Streifen 4 überdrücken.

Um eine Änderung der Verhältnisse für andere Abteile 8 bei einer Änderung des Ausströmquerschnittes der Luftzuleitung 1 in einem oder mehreren Abteilen zu vermeiden, kann in der Luftzuleitung ein Druckfühler angeordnet sein, der auf den Ventilhalter des Klimaaggregates einwirkt und so für gleichbleibende Druckverhältnisse in der Luftzuleitung 1 sorgt.

Die Erfindung wurde zwar nur anhand einer Einkanal-Klimaanlage mit elektrischer Zusatzheizung erläutert, doch kann sie auch bei Zweikanal-Klimaanlagen angewandt werden. In diesem Falle wird eben bei erhöhtem Wärmebedarf aufgrund einer geringeren Besetzung eines Abteils der Zusatzkanal geöffnet und der Grundkanal mehr geschlossen bzw. die entsprechenden Abströmquerschnitte, wobei die Regelung so erfolgt, daß die gesamte in das Abteil einströmende Luftmenge vermindert wird.

Weiters kann die Erfindung auch beim Kühlbetrieb angewendet werden. Dabei muß die über die Luftzuleitung 1 bzw. den Grundkanal bei einer Zweikanal-Anlage zugeführte Luft so konditioniert sein, daß sie ein die bei der Auslegung der Anlage angenommene Besetzung aufweisendes Abteil auf die Soll-Temperatur bringen kann. Sinkt der Kühlbedarf aufgrund einer geringeren Besetzung ab, so wird die fehlende Wärmemenge durch die Zusatzheizung aufgebracht, wobei sich durch die dabei erfolgende Verminderung des Luftdurchsatzes erhebliche Energieeinsparungen erreben.

## Patentansprüche

1. Klimaanlage für Eisenbahnfahrzeuge mit Fahrgastabteilen (8) und einer Luftzuleitung (1) zu den Abteilen, wobei die Temperatur der zugeleiteten Frischluft bei einem bestimmten Besetzungsgrad der Abteile ausreicht, um die Solltemperatur in den Abteilen zu erreichen, und eine durch einen Thermostaten (13) gesteuerte Zusatzheizung (12) in jedem Abteil vorgesehen ist, die bei Verminderung der Besetzung der Abteile gegenüber dem genannten bestimmten Besetzungsgrad die gewünschte Solltemperatur im Abteil aufrecht erhält, dadurch gekennzeichnet, daß in der Luftzuleitung (1) jedes Abteils (8) eine Drosseleinrichtung (9) vorgesehen ist, welche eine stufenlose aber begrenzte Verminderung des Einströmquerschnittes zuläßt und diese Drosseleinrichtung (9) mit der Zusatzheizung (12) in solcher Wirkverbindung steht, daß bei Erhöhung der Zusatzheizung infolge Verminderung der Besetzung im Abteil (8) der Ausströmquerschnitt der Luftzuleitung (1) um ein vorbestimmtes Maß gedrosselt wird.

2. Klimaanlage nach Anspruch 1, dadurch gekennzeichnet, daß die Zusatzheizung durch elektrische Heizkörper (12) gebildet ist und die Drosseleinrichtung durch ein von einem Bimetall (4) gesteuertes, die Luftzuleitung (1) zum Abteil (8) mehr oder weniger freigebendes Drosselorgan (2) gebildet ist.

3. Klimaanlage nach Anspruch 2, dadurch gekennzeichnet, daß der elektrische Heizkörper (12) in einem, vorzugsweise unter dem Fenster geführten, Umluftkanal (6) angeordnet ist, der in einen an die Drosseleinrichtung (9) anschließenden zu Luftauslaßöffnungen (11) im Abteil (8) führenden Kanal (10) mündet, wobei im Mündungsbereich die beiden Kanäle (10, 6) durch ein im Querschnitt L-förmiges Drosselorgan (2) getrennt sind.

4. Klimaanlage nach Anspruch 2 oder 3, dadurch gekennzeichnet, daß das das Drosselorgan (2) steuernde Bimetall (4) der Einwirkung des elektrischen Heizkörpers (12) ausgesetzt ist.

5. Klimaanlage nach Anspruch 1, dadurch gekennzeichnet, daß das Drosselorgan (14) durch einen Stellmotor (15) gesteuert ist, der von einem die Signale eines Abteil-Temparaturfühlers (16) und einer Temperaturstelleinrichtung (17) verarbeitenden Regelverstärker (18) gesteuert ist, der gleichzeitig auch die Zusatzheizung steuert.

6. Klimaanlage nach einem der Ansprüche 1 bis 5, dadurch gekennzeichnet, daß in der Luftzuleitung (1) zu den einzelnen Abteilen (8) ein Druckfühler angeordnet ist, der auf die Regelung der Luftversorgung einwirkt und bei einer Druckerhöhung aufgrund der Drosselung des Abströmens in die Abteile durch die Drosseleinrichtungen (9) den Luftdurchsatz vermindert.

7. Klimaanlage nach Anspruch 2, dadurch gekennzeichnet, daß das Drosselorgan (2) von zwei im Bereich ihrer einen Enden miteinander verbundenen Bimetallstreifen (3, 4) gehalten ist, von denen einer (3) der aus der Luftzuleitung (1) abströmenden Luft und der andere (4) der Einwirkung der Zusatzheizung ausgesetzt ist.

## Claims

1. An air conditioning device for railroad vehicles, with passenger compartments and air feeder ducts serving these compartments, the temperature of the fresh air supplied being sufficient to attain the desired target temperature in the compartments for a given number of passengers therein, and an additional thermostat-controlled heating unit being provided in each compartment in order to maintain the desired target temperature in the compartment if the number of passengers in the compartments drops below that referred to above, wherein the air feeder duct of each compartment contains a throttling device permitting a continuous but limited reduction of the inflow cross-section, and wherein the said throttling device is connected to the additional heating unit in such a way that the outflow cross-section of the air feeder duct is reduced by a predetermined degree upon increased activity of the additional heating unit due to a decrease in the number of passengers in the compartment.

2. An air conditioning device according to claim 1, wherein the additional heating unit is configured as an electric heater, and wherein the throttling device comprises a throttle element which is controlled by a bimetallic strip and opens the air feeder duct into the compartment to a smaller or larger degree.

3. An air conditioning device according to claim 2, wherein the electric heater is positioned in an air circulation duct preferably situated below the window and opening into a duct leading from the throttling device to air outlet openings in the compartment, the two ducts being separated by a throttling element of L-shaped cross-section in the area where they meet.

4. An air conditioning device according to claim 2 or 3, wherein the bimetallic strip controlling the throttle element is acted upon by the electric heater.

5. An air conditioning device according to claim 1, wherein the throttle element is controlled by a servomotor, which in turn is controlled by a servo amplifier processing the signals of a temperature sensor in the compartment and a temperature-setting device, and simultaneously controlling the additional heating unit.

6. An air conditioning device according to any of claims 1 to 5, wherein a pressure sensor is situated in the air feeder duct of the individual compartments, which sensor influences the control of the air supply and which will reduce the air throughout by means of the throttling devices when a throttling of the air-flow into the compartments leads to a pressure build-up.

7. An air conditioning device according to claim 2, wherein the throttling element is held by two bimetallic strips whose ends are joined on one side, one of the said strips being subject to the air flowing out of the air feeder duct, and the other one to the effect of the additional heating unit.

## Revendications

1. Installation de conditionnement de l'air pour wagons de chemin de fer (8), comportant des compartiments, où la température de l'air frais (1) fourni suffit, pour un taux d'occupation des compartiments déterminé, pour atteindre la température prescrite dans les compartiments, et où il est prévu, dans chaque compartiment, un chauffage supplémentaire (12) commandé par un thermostat (13), qui maintient, dans un compartiment, la valeur prescrite si l'occupation du compartiment diminue par rapport au taux d'occupation déterminé mentionné, installation caractérisée en ce qu'il est prévu, sur la conduite d'arrivée d'air (1) de chaque compartiment (8), un dispositif d'étranglement (9) qui assure une diminution progressive, mais limitée, de la section d'arrivée, et que ce dispositif d'étranglement (9) est en liaison d'action avec le chauffage supplémentaire (12), dans des conditions telles que si le chauffage d'appoint augmente à la suite de la diminution de l'occupation du compartiment (8), la section d'écoulement de la conduite d'arrivée d'air (1) est étranglée dans une mesure déterminée.

2. Installation suivant la revendication 1, caractérisée en ce que le chauffage supplémentaire ou d'appoint est formé par des radiateurs électriques (12) et que le dispositif d'étranglement est formé par un organe d'étranglement (2) commandé par un bilame (4), ouvrant plus ou moins la conduite d'arrivée d'air (1) vers le compartiment (8).

3. Installation suivant la revendication 2, caractérisée en ce que le radiateur électrique (12) est disposé dans une gaine de reprise d'air (6), passant de préférence sous la fenêtre, qui débouche dans un canal (10) conduisant aux orifices (11) d'emission d'air dans le compartiment (8), en se raccordant au dispositif d'étranglement (9), les deux canaux (10, 6) étant séparés, dans la zone de l'embouchure, par un organe d'étranglement (2) dont la section est en forme de L.

4. Installation suivant la revendication 2 ou 3, caractérisée en ce que le bilame (4) qui commande l'organe d'étranglement (2) est soumis à l'action du radiateur électrique (12).

5. Installation suivant la revendication 1, caractérisé en ce que l'organe d'étranglement (14) est commandé par un moteur pas à pas (15) qui est lui-même commandé par un amplificateur de réglage (18) agissant sous l'effet des signaux d'un détecteur de température (16) du compartiment, et d'un dispositif (17) de réglage de la température, qui commande en même temps le chauffage d'appoint.

6. Installation suivant une des revendications 1 à 5, caractérisé en ce qu'il est disposé sur la conduite d'arrivée d'air (1) aux différents compartiments (8), un détecteur de pression, qui coopère au réglage de l'alimentation en air, et qui diminue le débit d'air dans les compartiments en cas d'augmentation de la pression en raison de l'étranglement de l'évacuation, au moyen des dispositifs d'étranglement (9).

7. Installation suivant la revendication 2, caractérisée en ce que l'organe d'étranglement (2) est maintenu par deux bilames (3, 4) reliés ensemble dans la zone d'une de leurs extrémités, dont l'un (3) est soumis à l'action de l'air qui s'échappe de la conduite (1) d'arrivée d'air, et l'autre (4), à celle du chauffage d'appoint.

# Fig. 1

# Fig. 2

*Fig. 3*

*Fig. 4*

*Fig. 5*